# EUROPÄISCHE PATENTANMELDUNG

(11) **EP 0 891 051 A2**
(43) Veröffentlichungstag der Anmeldung: **13.01.1999**
(21) Anmeldenummer: 98890185.6
(22) Anmeldetag: 29.06.1998
(51) Int. Cl.: H04J 3/06, H04J 3/14

(54) **Verfahren zur Verbesserung der Weitergabe der Taktqualitäts-information in SDH-Netzen**

(30) Priorität: 10.07.1997 AT 1193/97
(71) Anmelder: Siemens Aktiengesellschaft Österreich, 1210 Wien (AT)
(72) Erfinder: Herr, Helmut, Dr. Ing., 82024 Taufkirchen (DE); Thanhäuser, Gerhard, Dipl. Ing., 86415 Mering (DE); Klug, Karl, 2145 Hausbrunn (AT); Weinzierl, Peter, Dipl.Ing., 1070 Wien (AT)
(74) Vertreter: Matschnig, Franz, Dipl.-Ing.

(57) **Zusammenfassung**

Ein Verfahren zur Weiterleitung bzw. Erzeugung einer Takt-Qualitätsinformation in SDH-Netzen, die zumindest einen primären Referenztaktgeber (PRC), Netzelemente (NE) sowie Netztakteinheiten (SSU) aufweisen, und die Netztakteinheiten von dem Takt des primären Referenztaktgebers synchronisiert werden, bei Ausfall eines primären Referenztaktes jedoch im Speicherbetrieb einen internen Takt (SSU-T) erzeugen und über zumindest zwei Leitungen an Netzelemente weitergeben, wobei im Speicherbetrieb das Ausgangssignal der Netztakteinheit (SSU) an einer Leitung abgeschaltet wird und die Netzelemente (NE) dazu eingerichtet sind, bei Fehlen des Taktes auf dieser Leitung, die der Netztakteinheit entsprechende Qualitätsinformation (SSU-T) zu generieren und in die SDH-Signale einzusetzen. Dazu enthält die Netztakteinheit (SSU) einen gesteuerten Schalter (S), mit dessen Hilfe der Sekundärtakt von einem (Al) der Ausgänge (Al, A2) abgeschaltet wird, falls sich die Netztakteinheit bei Ausfall der Primärreferenz im Speicherbetrieb befindet und das Netzelement (NE) bzw. seine Gerätetakteinheit (SEC) sind dazu eingerichtet, bei Feststellen eines Signalausfalles an einem Takteingang (El) als Qualitätsinformation (QL) jene des Sekundärtaktes (SSU-T) in weiterzugebende SDH-Signale einzusetzen.

## Beschreibung

Die Erfindung bezieht sich auf ein Verfahren zur Weiterleitung bzw. Erzeugung einer Takt-Qualitätsinformation in SDH-Netzen, die zumindest einen primären Referenztaktgeber, Netzelemente sowie Netztakteinheiten aufweisen, und die Netztakteinheiten von dem Takt des primären Referenztaktgebers synchronisiert werden, bei Ausfall eines primären Referenztaktes jedoch im Speicherbetrieb einen internen Sekundär-Referenztakt erzeugen und über zumindest zwei Leitungen an Netzelemente weitergeben.

Die Erfindung bezieht sich ebenso auf ein SDH-Übertragungsnetz mit zumindest einem primären Referenztaktgeber, mit Netzelementen zur Verarbeitung von SDH-Digitalsignalen, die neben ihrer Nutzinformation auch eine codierte Qualitätsinformation enthalten können, sowie mit Netztakteinheiten zur Erzeugung und Weitergabe eines Sekundärreferenztaktes bei Ausfall des Primärreferenztaktes, wobei eine Netztakteinheit zumindest zwei Taktausgänge besitzt und jedes Netzelement zumindest zwei, mit diesen Ausgängen je verbundene Takteingänge, und jedes Netzelement nach vorgegebenen Kriterien aus ihr zugeführten Referenztakten einen Takt zur Synchronisation einer geräteinternen Gerätetakteinheit auswählt sowie Taktsignale an ihren Ausgängen zur Verfügung stellt, wobei die Gerätetakteinheit bei Ausfall bzw. Qualitätsmangel von ihr zugeführten Referenztakten eine geräteinterne Tertiärreferenz erzeugt sowie Taktsignale und eine Qualitätsinformation liefert.

SDH-Netze sind Netze zur Informationsübertragung, die gemäß der Synchronen digitalen Hierarchie, abgekürzt "SDH" aufgebaut bzw. gestaltet sind. In solchen Netzen sind alle Signale auf eine gemeinsame Referenzfrequenz bezogen und im Idealfall synchron und phasenstarr zueinander. Um die digitalen SDH-Signale in den diversen Netzelementen, wie z.B. Multiplexer, Leitungsendgeräte, Schalteinrichtungen etc. richtig verarbeiten zu können, können die internen Taktversorgungen in den Netzelementen nicht frei laufen, sondern müssen gleichfalls synchron zu einer Netzreferenzfrequenz sein. Die Referenzfrequenz wird daher von einer hochgenauen und stabilen Referenzquelle, z.B. einer Atomuhr, an die einzelnen Netzelemente übertragen. Englisch wird diese Quelle als Primary Reference Clock, abgekürzt PRC genannt und Details hierzu sind der ITU-T Rec. G. 811: "Timing requirements at the outputs of primary reference clocks suitable for plesiochronous operation of international digital links" zu entnehmen.

Zur Synchronisation wird üblicherweise ein "Master-Slave"-Verfahren verwendet, bei dem eine Kette von Taktversorgungen ausgehend von einem primären Referenztaktgeber über PLL-Regelkreise phasenstarr miteinander verbunden sind. Der Transport der Synchroninformation erfolgt dabei über die SDH-Signale zwischen den Netzelementen, wobei aufgrund nicht idealer Eigenschaften der Übertragungswege und der Taktversorgungen Phasenschwankungen als Jitter und Wander auftreten. Solche Phasenschwankungen müssen in bestimmten Grenzen gehalten werden, die auch durch Empfehlungen festgelegt sind. (Vgl. "The control of jitter and wander..." in ITU-T Rec. G. 823 und G 825, beide März 1993).

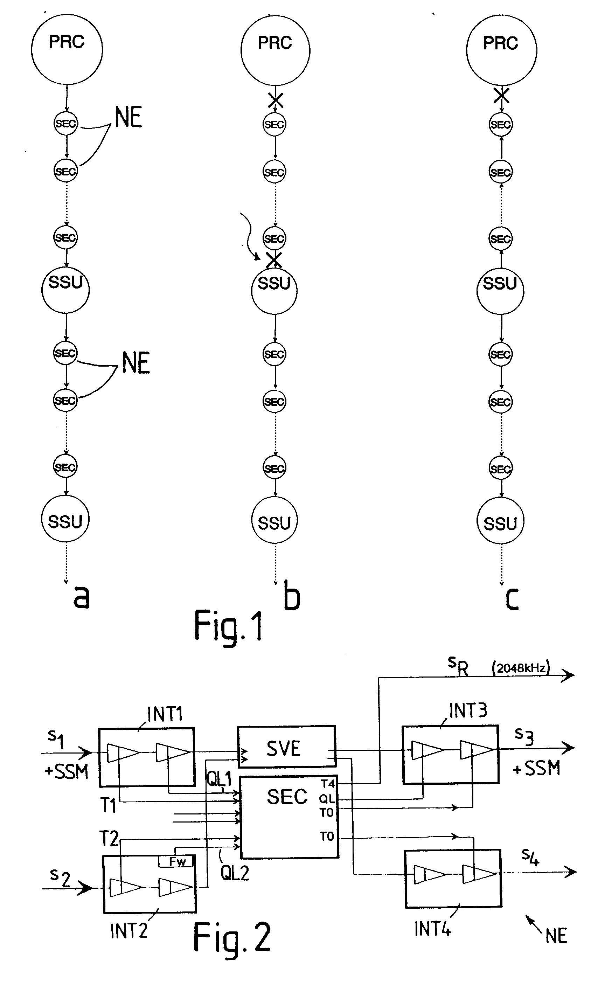

In einem SDH-Netz sind Taktversorgungen unterschiedlicher Qualität hinsichtlich ihrer Stabilität und Genauigkeit vorhanden. Typisch sind dabei Master-Slave-Synchronisationsketten, z.B. gemäß ITU-T Rec. 803: "Architectures of transport networks based on the Synchronous Digital Hierarchy", März 1993. Die von einem primären Referenztaktgeber PRC erzeugte Primärreferenz wird über eine Kette von Netzelementen SE zu einer Netztakteinheit SSU hoher Qualität übertragen, wobei auch die Netzelemente in der Kette synchronisiert werden. Die Netztakteinheiten SSU filtern die bei der Übertragung hinzugekommenen Störungen, nämlich Jitter und Wander, weitgehend aus dem Synchronisationssignal heraus und können, falls die Verbindung zur Primärreferenz vorübergehend gestört ist, auf Grund ihrer hohen Eigenstabilität auch als Sekundärreferenzquellen für Teile des SDH-Netzes dienen. In Fig. 1 ist nach der Primärreferenz PRC mit einem X eine Unterbrechung zwischen der Primärreferenz und dem ersten Netzelement SE einer Übertragungsstrecke angedeutet. Das erste Netzelement SE nach der Unterbrechung verliert sein Referenzsignal und geht, soferne kein alternatives Referenzsignal zur Verfügung steht, in den sogenannten Speicherbetrieb über. In diesem Fall erzeugt eine geräteinterne Takteinheit SEC eine Tertiärreferenz, welche die gesamte nachfolgende Kette von Netzelementen SE synchronisieren würde, falls keine Gegenmaßnahmen getroffen würden. Eine solche Synchronisierung ist nämlich nicht zulässig, da bei der Master-Slave-Synchronisation sichergestellt sein muß, daß eine Taktversorgung höherer Qualitätsstufe, z. B. eine Netztakteinheit SSU, von einem Referenzsignal synchronisiert wird, das aus einer freilaufenden oder im Speicherbetrieb befindlichen Taktversorgung einer niedrigeren Qualitätsstufe, z. B. einer Gerätetakteinheit SEC stammt. Aus diesem Grund besteht die Möglichkeit, in den Overhead der SDH-Signale eine codierte Qualitätsinformation betreffend das Referenzsignal einzusetzen. Diese Information gibt an, welcher Qualitätsstufe die jeweilige Taktversorgung am Beginn einer Synchronisationskette entspricht, wobei eine synchronisierte Taktversorgung die im synchronisierenden Signal enthaltene Qualitätsinformation weitergibt, eine freilaufende oder im Speicherbetrieb befindliche Taktversorgung jedoch den der eigenen Qualitätsstufe entsprechenden Code einsetzt. Im Normalbetrieb des SDH-Netzes gemäß Fig. 1a ist dies die Qualität des primären Referenztaktgebers PRC. Bei einer Unterbrechung der Synchronisationskette wird die Qualität der im Speicherbetrieb befindlichen ersten Taktversorgung nach der Unterbrechungsstelle in das SDH-Signal eingesetzt, was dem Fall nach Fig. 1b entspricht. Zu diesem Zeitpunkt wird die erste Netztakteinheit SSU, die auf die Störungsstelle folgt, natürlich nicht von dem Synchronisationssignal minderer Qualität synchronisiert, was durch ein zweites X in Fig.1b angedeutet ist. Vielmehr muß nun die Kette in dem Sinn rekonfiguriert werden, daß diese Netztakteinheit SSU die Synchronisation der Kette mit einer Sekundärreferenz so lange aufrechterhält, solange die Störung zwischen der Primärreferenz PRC und dem ersten Netzelement NE nicht behoben ist. Dies ist in Fig.1c symbolisch veranschaulicht, in welcher die Richtung der Synchronisation zwischen der Netztakteinheit SSU und der Unterbrechungsstelle umgekehrt ist.

Den Netztakteinheiten SSU, die ein hochwertiges Sekundärreferenzsignal liefern, kommen keine nachrichtentechnischen Aufgaben zu und sie verfügen daher auch nicht über Schnittstellen für SDH-Signale, sondern nur über reine Takteingänge und Taktausgänge. Auf den Ausgangssignalen, die, ebenso wie die Eingangssignale üblicherweise 2048 kHz-Signale gemäß der ITU-T Rec. G. 703 sind, ist kein Nachrichtentransport vorgesehen oder möglich, somit auch keine Weiterleitung über die Qualitätsinformation des Taktes. Die von einer Netztakteinheit SSU vorübergehend synchronisierten Netzelemente NE erhalten daher auch keine Qualitätsinformation über ihre Synchronisierung.

Eine Aufgabe der Erfindung liegt darin, diesem Nachteil auf möglichst einfache Weise zu begegnen.

Die Aufgabe wird ausgehend von einem Verfahren der eingangs genannten Art erfindungsgemäß dadurch gelöst, daß im Speicherbetrieb das Ausgangssignal der Netztakteinheit an einer Leitung abgeschaltet wird und die Netzelemente bei Fehlen des Taktes auf dieser Leitung, die der Netztakteinheit entsprechende Qualitätsinformation generieren und in die SDH-Signale einsetzen.

Weiters wird die Aufgabe auch mit einem SDH-Übertragungsnetz der oben angegebenen Art gelöst, bei welchem erfindungsgemäß die Netztakteinheit einen gesteuerten Schalter enthält, mit dessen Hilfe der Sekundärtakt von einem der Ausgänge abgeschaltet wird, falls sich die Netztakteinheit bei Ausfall der Primärreferenz im Speicherbetrieb befindet, und das Netzelement bzw. seine Gerätetakteinheit bei Feststellen eines Signalausfalles an einem Takteingang als Qualitätsinformation jene des Sekundärtaktes in weiterzugebende SDH-Signale einsetzt.

Dank der Erfindung erhalten die von einer Netztakteinheit SSU synchronisierten Netzelemente NE bei gutem Referenztakt auch noch die Information, daß sich die Netztakteinheit SSU im Speicherbetrieb befindet, d.h. nicht von einer Primärreferenz PRC synchronisiert ist.

Eine einfache Erkennung des Synchronisationszustandes ohne weitgehende Eingriffe in vorhandene Geräte ist durchführbar, falls einem Takteingang des Netzelementes als fester Takt-Qualitätswert jener des Primärtaktes und einem weiteren Takteingang des Netzelementes jener des Sekundärtaktes zugeordnet ist, wobei dem Takteingang mit dem Takt-Qualitätswert des Primärtaktes die höhere Priorität zukommt, sodaß bei Vorhandensein eines Signales an diesem Eingang das Signal immer verwendet wird, solange es vorhanden ist.

Die Erfindung samt weiteren Vorteilen ist im folgenden als Ausführungsbeispiel unter Bezugnahme auf die Zeichnungen näher erläutert, in welcher zeigen:
Fig. 1a bis c eine Synchronisationskette eines SDH-Netzes in verschiedenen Synchronisationszuständen.
Fig.2 in einem symbolischen Blockschaltbild eines Netzelementes mit einer Gerätetakteinheit die prinzipielle Auswertung und Weitergabe der Synchronisationsstatus-Meldung,
Fig.3 in einem symbolischen Blockschaltbild einer Gerätetakteinheit die Referenztaktauswahl und
Fig.4 in einem Blockschaltbild eine Netztakteinheit und den Eingang eines an diese angeschlossenen Netzelementes.

Das Prinzip der Synchronisationskette in einem SDH-Netz wurde bereits oben unter Bezugnahme auf Fig. 1 erläutert.

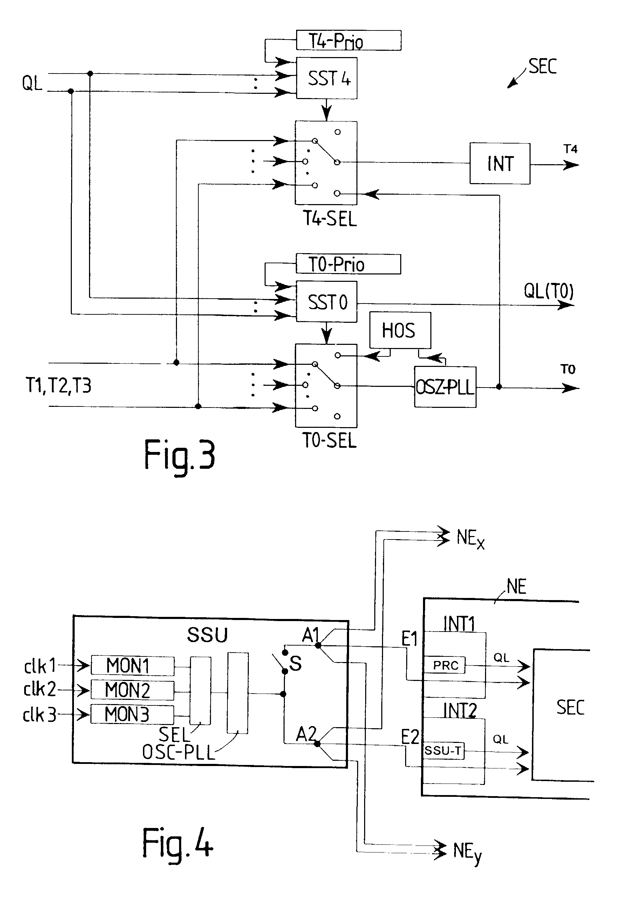

Gemäß Fig.2 werden einer Schnittstelle INT 1 bzw. INT2 eines Netzelementes NE ein SDHEingangssignal s₁ bzw. s₂ zugeführt, wobei angenommen ist, daß das Signal s₁ eine Synchronisationsstatus-Meldung SSM enthält. Von den Schnittstellen gelangt das Signal zu einer Signalverarbeitungseinheit SVE und wird nach Verarbeitung über Ausgangsschnittsteilen INT 3 und INT 4 als Ausgangssignal s₃ bzw. s₄ abgegeben.

Aus den Eingangssignalen s₁ und s₂ werden der Takt T1 bzw. T2 entnommen und der Gerätetakteinheit SEC zugeführt. Dem Signal s₁ wird die Synchronisationsstatus-Meldung SSM entnommen und ihr Qualitätswert QL1 de Takteinheit SEC zugeführt. Enthält ein Signal, hier das Signal s₂, keine Meldung, beispielsweise falls es sich um einen externen Referenztakt, ein PDH-Signal etc. handelt, so wird ein Festwert FW angenommen und als Qualitätswert QL2 der Takteinheit SEC zugeführt, sodaß gemäß ITU-T Rec. G. 707, "Network mode interface for Synchronous Digital Hierarchy", Nov. 1995, jedem Signal ein Qualitätswert zugeordnet ist. Auf diese Weise werden der Takt und der zugehörige Qualitätswert mehrere Schnittstellenbaugruppen, von welchen hier nur zwei gezeigt sind, der Takteinheit SEC zugeführt, welche nach verschiedenen Kriterien, unter anderem auch nach dem Qualitätswert QL, einen der angebotenen Takte als Referenztakt T0 für die interne Signalverarbeitung auswählt. Auf die gleiche Weise wird ein Referenztakt T4 für den Taktausgang des Netzelementes NE ausgewählt, wobei die Referenztakte T0 und T4 aus unterschiedlichen Quellen stammen können.

In dem Blockschaltbild einer Gerätetakteinheit SEC nach Fig.3 erkennt man näher die Referenztaktauswahl. Prinzipiell sind in der Gerätetakteinheit ein sogenannter T0-Selektor und ein sogenannter T4-Selektor T0-SEL bzw. T4-SEL vorhanden und jedem dieser Selektoren ist eine Selektorsteuerung SST 0 bzw. SST 4 zugeordnet. Den Selektorsteuerungen ist die Qualitätsinformation QL vom Eingang her zugeführt und überdies hat sie Zugriff auf eine Prioritätsliste T0-Prio bzw. T4-Prio. Den Selektorsteuerungen T0-SEL bzw. T4-SEL werden beispielsweise drei Eingangsreferenztakte T1, T2 und T3 zugeführt und über den Selektor T4-SEL je nach Selektorstellung über eine Schnittstelle INT als Referenztakt T4 an den Ausgang gegeben.

Die Gerätetakteinheit SEC enthält weiters einen internen Oszillator mit PLL-Schleife OSZ-PLL, der entweder von einem der Referenztakte T1, T2, T3 synchronisiert wird oder, falls kein geeignetes Referenzsignal zur Verfügung steht, in den Speicherbetrieb übergeht, wofür ein Holdover-Speicher HOS vorgesehen ist. Falls für den Taktausgang T4 kein geeignetes Referenzsignal zur Verfügung steht, wird das T4-Taktsignal abgeschaltet.

Der interne Takt T0 wird auch zur Erzeugung der abgehenden Schnittstellensignale verwendet. Als Qualitätsinformation wird in die abgehenden Signale der Qualitätswert des ausgewählten Referenzsignals oder - bei Speicherbetrieb - der der Qualität der Gerätetakteinheit entsprechende Wert eingesetzt.

Das T4-Referenzsignal ist ein reines 2048 kHz-Signal, das, wie oben erwähnt, keine Qualitätsinformation transportieren kann. Durch das Abschaltekriterium kann jedoch sichergestellt werden, daß die Qualität einen vorgegebenen Mindestwert nicht unterschreitet, der nicht niedriger sein darf, als die Qualitätsstufe der an den Taktausgang T4 angeschlossenen Taktversorgung.

Den Selektoren T0-SEL und T4-SEL werden die aus SDH-Signalen, PDH-Signalen oder externen Referenztakten stammenden Referenztakte T1, T2 und T3 ebenso parallel zugeführt, wie die zugehörigen Qualitätswerte an die Steuerungen SST 0 und SST 4 für die Selektoren T0-SEL und T4-SEL zugeführt werden. Zusammen mit der bereits genannten Prioritätsliste ermittelt die Selektorsteuerung nach einem standardisierten Algorithmus den besten Referenztakt und stellt die Selektoren T0-SEL und T4-SEL entsprechend ein.

Wie bereits eingangs erwähnt, besteht ein Problem darin, daß die Netztakteinheiten SSU, welche der zweithöchsten Qualitätsstufe von Taktversorgungen in einem SDH-Netz entsprechen, nicht über Schnittstellen für SDH-Signale verfügen und reine Taktausgänge besitzen, wobei auf den entsprechenden Ausgangssignalen, meist 2048 kHz-Signale kein Nachrichtentransport möglich ist. Eine eingeschränkte Qualitätsinformation kann jedoch folgendermaßen weitergegeben werden.

### Von einem Netzelement NE zu einer Netztakteinheit SSU

Wie oben in Zusammenhang mit Fig.3 ausgeführt, besitzen die Netzelemente NE die Möglichkeit, den T4-Taktausgang abzuschalten, wenn die Qualität des Taktes eine festgelegte Schwelle unterschreitet. Man kann diese Schwelle auf "PRC", somit die höchste Qualitätsstufe setzen, um sicherzustellen, daß ein an der Netztakteinheit SSU ankommendes Signal ein bis zu dem primären Referenztaktgeber PRC verfolgbares Signal ist. Dann entsprechen auch die Ausgangssignale dieser Qualitätsstufe.

### Von einer Netztakteinheit SSU zu einem Netzelement NE

Die Ausgangssignale einer Netztakteinheit SSU entsprechen wie oben ausgeführt, entweder der höchsten Qualitätsstufe "PRC" oder schlechtestenfalls der zweithöchsten Qualitätsstufe "SSU-T", falls alle Referenzsignale ausgefallen sind und die Netztakteinheit SSU in den Speicherbetrieb übergegangen ist. Würden die Netzelemente NE über eine Information dahingehend verfügen, ob die sie speisende Netztakteinheit SSU synchronisiert ist oder aber sich im Speicherbetrieb befindet, so könnten sie die richtige Qualitätsinformation in die abgehenden SDH-Signale einsetzen. Dabei wäre ein Abschalten der Ausgangstakte der Netztakteinheit SSU im Speicherbetrieb nicht sinnvoll, da die Qualität der Ausgangstakte auch im Speicherbetrieb noch um vieles höher ist, als die Qualität eines intern erzeugten Taktes eines Netzelementes NE.

Um die Zuverlässigkeit in SDH-Systemen zu erhöhen, sind üblicherweise zwei Taktleitungen von einer Netztakteinheit SSU zu den jeweils angeschlossenen Netzelementen NE vorgesehen und es wird im folgenden das Vorhandensein zweier solcher Taktleitungen vorausgesetzt. In Fig.4 ist links stark vereinfacht eine Netztakteinheit SSU dargestellt, der hier beispielsweise drei Referenztakte clk1, clk2 und clk3 zugeführt werden und nach Durchlaufen von Überwachungen MON1, MON2 und MON3 einem Selektor SEL zugeführt werden, der den geeigneten Referenztakt auswählt. Der Selektor führt den ausgewählten Takt einem Oszillator mit Phasenregelschleife OSZ-PLL zu und von hier gelangt das beispielsweise stabilisierte Signal zu zwei Taktausgängen A1 und A2, wobei zwischen dem Oszillator OSZ-PLL und dem Ausgang A1 ein gesteuerter Schalter S liegt. Von den Ausgängen A1 und A2 werden Netzelemente NE versorgt, von welchen der Eingang eines Netzelementes NE mit zwei Schnittstellen INT 1 und INT 2 entsprechend zwei Eingängen E1 und E2, die mit den Ausgängen A1 und A2 der Netztakteinheit SSU verbunden sind. Die Schnittstelle INT 1 enthält als festen Qualitätswert den Qualitätswert "PRC"| welcher einem primären Referenztakt entspricht, wogegen die Schnittstelle INT 2 in einem Speicher als Festwert für die Qualitätsinformation QL den Wert "SSU-T" enthält, welcher dem zweithöchsten Qualitätswert eines Referenztaktes, nämlich des Referenztaktes einer Netztakteinheit SSU entspricht. Von den Schnittstellen INT 1 und INT 2 des Netzelementes NE werden die Qualitätsinformation QL1 und QL2 bzw. die Takte T1 bzw. T2 an die Gerätetakteinheit SEC weitergegeben, was oben ausführlich an Hand von Fig.2 und Fig.3 erläutert wurde.

Die Netztakteinheit SSU ist nun dazu eingerichtet, den Schalter S zu öffnen, wenn die Einheit SSU in den Speicherbetrieb übergeht. Dieses Steuern des Schalters kann entweder von dem Oszillator OSZ/PLL aus erfolgen, wie hier durch einen Pfeil eingezeichnet, oder ausgehend von den Überwachungen MON1 bis MON3 oder sonst auf geeignete Weise und ist jedenfalls problemlos, da jede Netztakteinheit SSU auch nach dem Stand der Technik den Speicherbetrieb anzeigt. In dem Netzelement NE kommt dem Takteingang El mit dem Taktqualitätswert PRC des Primärtaktes die höhere Priorität zu, d. h. daß bei Vorhandensein eines Signales an diesem Eingang El das Signal auch immer verwendet wird, solange es vorhanden ist. Falls das Signal am Eingang El jedoch ausfällt, weil die Netztakteinheit SSU in den Speicherbetrieb übergegangen ist und der Schalter S daher geöffnet wurde, liegt nur noch am zweiten Eingang E2 bzw. am zweiten Interface INT 2 des Netzelementes NE ein Signal an und es wird von dort die Qualitätsinformation QL2 = "SSU-T" an die Gerätetakteinheit SEC weitergegeben und die abgehenden Signale werden dort, wie in Zusammenhang mit Fig.3 beschrieben, mit dieser Qualitätsinformation versehen.

Die Erfindung löst somit auf einfachste Weise das Problem der Weitergabe der Qualitätsinformation in SDH-Netzen mit Netztakteinheiten, wobei die Erfindung auch auf bereits bestehende Systeme anwendbar ist.

## Patentansprüche

1. Verfahren zur Weiterleitung bzw. Erzeugung einer Takt-Qualitätsinformation in SDH-Netzen, die zumindest einen primären Referenztaktgeber (PRC), Netzelemente (NE) sowie Netztakteinheiten (SSU) aufweisen, und die Netztakteinheiten von dem Takt des primären Referenztaktgebers synchronisiert werden, bei Ausfall eines primären Referenztaktes jedoch im Speicherbetrieb einen internen Sekundär-Referenztakt (SSU-T) erzeugen und über zumindest zwei Leitungen an Netzelemente weitergeben,
dadurch gekennzeichnet, daß
im Speicherbetrieb das Ausgangssignal der Netztakteinheit (SSU) an einer Leitung abgeschaltet wird und die Netzelemente (NE) bei Fehlen des Taktes auf dieser Leitung, die der Netztakteinheit entsprechende Qualitätsinformation (SSU-T) zu generieren und in die SDH-Signale einsetzen.

2. SDH-Übertragungsnetz
mit zumindest einem primären Referenztaktgeber (PRC), mit Netzelementen (NE) zur Verarbeitung von SDH-Digitalsignalen, die neben ihrer Nutzinformation auch eine codierte Qualitätsinformation (QL) enthalten, sowie mit Netztakteinheiten (SSU) zur Erzeugung und Weitergabe eines Sekundärreferenztaktes bei Ausfall des Primärreferenztaktes,
wobei eine Netztakteinheit (SSU) zumindest zwei Taktausgänge (A1, A2) besitzt und jedes Netzelement (NE) zumindest zwei, mit diesen Ausgängen je verbundene Takteingänge (E1, E2), und
jedes Netzelement (NE) nach vorgegebenen Kriterien aus ihr zugeführten Referenztakten einen Takt zur Synchronisation einer geräteinternen Gerätetakteinheit (SEC) auswählt sowie Taktsignale an ihren Ausgängen zur Verfügung stellt,
wobei die Gerätetakteinheit (SEC) bei Ausfall bzw. Qualitätsmangel von ihr zugeführten Referenztakten eine geräteinterne Tertiärreferenz erzeugt sowie Taktsignale und eine Qualitätsinformation liefert,
dadurch gekennzeichnet, daß
die Netztakteinheit (SSU) einen gesteuerten Schalter (S) enthält, mit dessen Hilfe der Sekundärtakt von einem (A1) der Ausgänge (A1, A2) abgeschaltet wird, falls sich die Netztakteinheit bei Ausfall der Primärreferenz im Speicherbetrieb befindet, und
das Netzelement (NE) bzw. seine Gerätetakteinheit (SEC) bei Feststellen eines Signalausfalles an einem Takteingang (E1) als Qualitätsinformation (QL) jene des Sekundärtaktes (SSU-T) in weiterzugebende SDH-Signale einsetzt.

3. SDH-Übertragungsnetz nach Anspruch 1, dadurch gekennzeichnet, daß einem Takteingang (E1) des Netzelementes (NE) als fester Takt-Qualitätswert jener (PRC) des Primärtaktes und einem weiteren Takteingang (E2) des Netzelementes jener (SSU-T) des Sekundärtaktes zugeordnet ist, wobei dem Takteingang (E1) mit dem Takt-Qualitätswert des Primärtaktes die höhere Priorität zukommt, sodaß bei Vorhandensein eines Signales an diesem Eingang das Signal immer verwendet wird, solange es vorhanden ist.
